## Europäisches Patentamt
## European Patent Office
## Office européen des brevets

(19)

(11) Veröffentlichungsnummer: **0 473 914 B1**

(12) **EUROPÄISCHE PATENTSCHRIFT**

(45) Veröffentlichungstag der Patentschrift: **28.06.95**

(51) Int. Cl.⁶: **F02D  41/14**, F02D 41/02

(21) Anmeldenummer: **91111898.2**

(22) Anmeldetag: **17.07.91**

(54) **System zur Regelung eines Stellwerks in einem Kraftfahrzeug.**

(30) Priorität: **16.08.90 DE 4025847**

(43) Veröffentlichungstag der Anmeldung:
**11.03.92 Patentblatt  92/11**

(45) Bekanntmachung des Hinweises auf die
Patenterteilung:
**28.06.95 Patentblatt  95/26**

(84) Benannte Vertragsstaaten:
**DE FR GB**

(56) Entgegenhaltungen:
**EP-A- 0 176 323
EP-A- 0 207 316
DE-A- 3 731 983
DE-A- 3 825 138**

**PATENT ABSTRACTS OF JAPAN vol. 6, no.
70 (M-113) 6. Mai 1982 & JP-A-57 008 803
(HITACHI LTD.) 18. Januar 1982**

**PATENT ABSTRACTS OF JAPAN vol. 10, no.
10 (M-446) 16. Januar 1986 & JP-A-60 173 327
(TOYOTA JIDOSHA K.K.) 6. September 1985**

(73) Patentinhaber: **ROBERT BOSCH GMBH
Postfach 30 02 20
D-70442 Stuttgart (DE)**

(72) Erfinder: **Karrelmeyer, Roland
Weststrasse 10
W-7107 Neckarsulm (DE)**
Erfinder: **Wietelmann, Jürgen
Hohestrasse 16
W-7257 Ditzingen (DE)**

## Beschreibung

### Stand der Technik

Die Erfindung betrifft ein System zur Regelung eines Stellwerks in einem Kraftfahrzeug gemäß dem Oberbegriff des Anspruchs 1.

Ein solches System ist aus der DE-OS 38 25 138 bekannt. Dort wird ein Verfahren und eine Vorrichtung zur adaptiven Stellregelung der elektromagnetischen Verstellung eines mengenbestimmenden Stellwerkes beschrieben. Diese Einrichtung umfaßt einen Stellregler für die Position eines mengenbestimmenden Stellwerkes in einer Dieselbrennkraftmaschine. Die Einrichtung stellt die Position des mengenbestimmenden Stellwerkes auf einen vorgegebenen Sollwert ein. Hierbei gelangt der Sollwert zusätzlich über einen sogenannten Führungsformer auf den Eingang des Reglers. Der Führungsformer kann dabei in der Sollwertsignal- bzw. in einer Zweigleitung angeordnet sein. In dem letzteren Fall wird das Sollwertsignal mit einem, vom Ausgangssignal des Führungsformers abhängigen Signal verknüpft. Dabei ergeben sich bei bestimmten Betriebsbedingungen ungünstige Reglereigenschaften. Insbesondere bei der Regelung von reibungsbehafteten elektromechanischen Verstellsystemen führt die im System befindliche Haft- bzw. Gleitreibung im Kleinsignal (kleine Änderung des Sollwerts) zu Dynamikverlusten. Ähnliche Probleme treten auch bei anderen Stellwerken, wie zum Beispiel dem Drosselklappensteller, auf.

Das System nach der DE-A-3825138 weist weiter einen Beobachter auf, der ein Streckenmodell benutz um Schätzgrößen , z.B. für die Regelstangengeschwindigkeit abzuleiten , die als Störgrößen dem Regler aufgeschaltet werden.

### Aufgabe der Erfindung

Der Erfindung liegt die Aufgabe zugrunde, bei einem System zur Regelung eines Stellwerks in einem Kraftfahrzeug der eingangs genannten Art in allen Betriebsbedingungen ein optimales Regelverhalten zu erzielen, die Dynamik des Systems zu verbessern, ohne dabei die Stabilität des geschlossenen Regelkreises zu verschlechtern. Diese Aufgabe wird durch die im Anspruch 1 gekennzeichneten Merkmale gelöst.

### Vorteile der Erfindung

Das erfindungsgemäße System hat den Vorteil, daß die Dynamik reibungsbehafteter elektromechanischer Stellsysteme im Kleinsignal wesentlich verbessert wird, ohne daß dabei die Eigendynamik und die Stabilität des geschlossenen Regelkreises beeinflußt werden. Desweiteren hat es den Vorteil, daß sowohl bei Kleinsignal als auch bei Großsignal das mengenbestimmende Glied ohne Überschwingen und mit hoher Dynamik auf einen vorgegebenen Wert eingestellt werden kann.

Vorteilhafte und zweckmäßige Ausgestaltungen der Erfindung sind in den Unteransprüchen gekennzeichnet.

### Zeichnungen

Die Erfindung wird nachstehend anhand den in den Zeichnungen dargestellten Ausführungsformen erläutert. So zeigen die Figur 1 ein Blockdiagramm des erfindungsgemäßen Regelsystems mit Aufschaltung, die Figur 1b ein Blockdiagramm des erfindungsgemäßen Regelsystems mit variablem Sollwertformer, die Figur 2 ein Flußdiagramm zur Verdeutlichung der Funktionsweise der Aufschaltung, die Figur 3 ein Flußdiagramm zur Verdeutlichung der Funktionsweise des Systems mit variablem Sollwertformer, die Figur 4 verschiedene Signalverläufe über der Zeit, die Figur 5 eine mögliche Ausgestaltung des Sollwertformers.

### Beschreibung eines Ausführungsbeispiels

Im folgenden wird das erfindungsgemäße System am Beispiel eines mengenbestimmenden Stellwerkes für eine Dieselkraftstoffpumpe beschrieben. Das System läßt sich aber auch auf andere reibungsbehaftete Stellwerke, insbesondere elektromagnetische Stellwerke übertragen. So ist es zum Beispiel auch möglich, das System für die Regelung eines Drosselklappenstellers zu verwenden. Dabei müssen eventuell andere Betriebskenngrößen berücksichtigt werden.

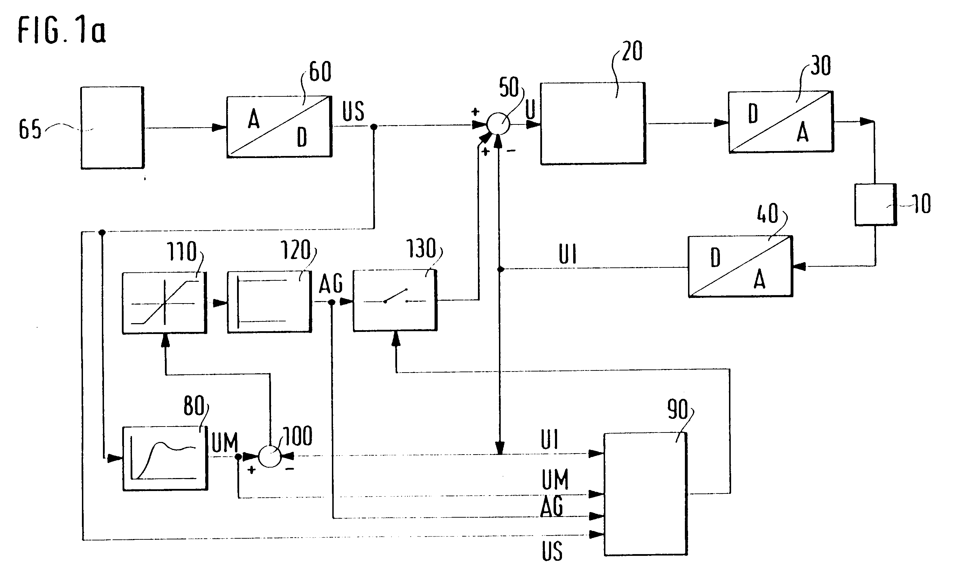

In Figur 1a ist eine schematische Blockdarstellung eines Ausführungsbeispiels des erfindungsgemäßen Regelsystems aufgezeigt. Ein mengenbestimmendes Stellwerk 10 steht mit einem Regler 20 in Verbindung. Ein die tatsächliche Position des Stellwerks anzeigendes Signal UI (Istwert) gelangt über einen Additionspunkt 50 auf den Regler 20. Da das Stellwerk üblicherweise analoge Ansteuersignale benötigt, ist bei einer digitalen Auslegung des Reglers 20 ein DA-Wandler 30 und ein DA-Wandler 40 notwendig. Über einen AD-Wandlers 60 gelangt das Ausgangssignal (Sollwert US) der Sollwertberechnungsstufe 65 zum Punkt 50. Der Sollwert US wird ferner einem Parallelmodell 80 und einer Logikschaltung 90 zugeleitet.

Das Ausgangssignal des Parallelmodells UM gelangt zu der Logikschaltung 90 und zu einem Summantionspunkt 100. Am zweiten Eingang des Summationspunktes 100 liegt mit negativem Vorzeichen der Istwert UI, der die tatsächliche Position des Stellwerks angibt. Dieses Signal liegt auch an einem weiteren Eingang der Logikschaltung 90.

Das Ausgangssignal der Summationspunkt 100 gelangt über einen Begrenzer 110 und einen Verstärker (P-Glied) 120 zum einen zur Logikschaltung 90 und zum anderen zu einer Schalteinrichtung 130.

Das Ausgangssignal des Verstärkers 120, auch als Aufschaltgröße AG bezeichnet, gelangt je nach Schaltstellung der Schalteinrichtung 130 auf den Summationspunkt 50. Da der Schaltzustand der Schalteinrichtung 130 vom Ausgangswert L der Logikschaltung 90 abhängt, ist die Schalteinrichtung mit dem Ausgang der Logikschaltung 90 verbunden.

Der Regler bewirkt, daß das Stellwerks 10 eine Position einnimmt, die dem von der Sollwertberechnungsstufe 65 vorgegebenen Sollwert US entspricht. Der Additionspunkt 50 erzeugt bei offener Schalteinrichtung (130) ein Differenzsignal U, das der Differenz zwischen Sollwert US und Istwert UI entspricht. Abhängig von diesem Differenzsignal U bestimmt der Regler 20 eine Stellgröße, die über dem DA-Wandler 30 zum Stellwerk 10 gelangt.

Die hier betrachteten Stellwerke sind üblicherweise reibungsbehaftet. Die bei elektromechanischen Stellsystemen auftretende Haft- bzw. Gleitreibung führt bei entsprechend stabiler Reglerauslegung im Großsignal zu Dynamikverlusten. Eine solche Reglerauslegung führt dazu, daß kleine Änderungen des Sollwerts US nur kleine Änderungen der Stellgröße bewirken, auf die das Stellwerk nur verzögert oder gar nicht reagiert. Denn kleine Stellkräfte reichen nicht aus, um die Haftreibung zu überwinden. Um diese Nachteile zu vermeiden, wird erfindungsgemäß dem Sollwert US eine Aufschaltgröße AG aufgeschaltet. Dieses Signal wird vorzugsweise dem Additionspunkt 50 zugeleitet.

Da diese zusätzliche Aufschaltgröße AG nur in bestimmten Betriebsbedingungen erforderlich ist, liegt zwischen dem Aufschaltgrößengenerator und dem Additionspunkt 50 eine Schalteinrichtung 130.

Zur Berechnung der Aufschaltgröße AG dient ein adaptiver Führungsformer. Dieser besteht im wesentlichen aus der Aufschaltlogik 90, dem Begrenzer 110, dem Verstärker 120 und der Schalteinrichtung 130. Das den geschlossenen Regelkreis nachbildende Parallelmodell 80 erzeugt aus dem Sollwert US eine Schätzgröße (gewünschte Referenz) UM für den Istwert des Regelkreises. Diese Schätzgröße bestimmt die Eigenschaften des Führungsformers. Bei guter Dynamik des Regelkreises entspricht die Ausgangsgröße des Parallelmodells 80 in etwa der Ausgangsgröße UI des geschlossenen Regelkreises.

Ein Parallelmodell berechnet das Ausgangssignal der nachzubildenden Einheit nur anhand der Eingangsgrößen der entsprechenden Einheit. Ein Beobachter berechnet dagegen eine Größe anhand des Eingangssignals und des Ausgangssignals der nachzubildenden Einheit.

Bei schlechter Dynamik des Regelkreises weichen diese beiden Signale von einander ab, wobei der Istwert UI üblicherweise kleiner ist als die Schätzgröße US. Die Differenz zwischen der Ausgangsgröße des Parallelmodells 80 und dem Istwert UI ist ein Maß für die aktuelle Dynamik des Regelkreises. Dieses Differenzsignal zwischen Ausgangsgröße des Parallelmodells 80 und dem Istwert des Regelkreises gelangt vom Summationspunkt 100 über einen Begrenzer 110 zu einem Verstärker 120. In diesen beiden Blöcken erfolgt eine Begrenzung und eine Verstärkung des Signals.

Die mittels des Begrenzers und des Verstärkers gebildete Aufschaltgröße AG gelangt dann über die Schalteinrichtung 130 zum Additionspunkt 50. Gleichzeitig wird die Aufschaltgröße AG der Aufschaltlogik 90 zugeleitet. Dieses Signal stellt also die eigentliche Aufschaltgröße dar und dient gleichzeitig auch mit als Entscheidungskriterium, ob überhaupt aufgeschaltet wird.

Abhängig vom Ausgangssignal L der Aufschaltlogik wird der Schalter der Schalteinrichtung 130 in den geschlossenen Zustand überführt. Die Aufschaltung hängt im wesentlichen von folgenden Kriterien ab.

Die Aufschaltung wird nur dann freigegeben, wenn sich der Sollwert für den Regelkreis um einen Mindestbetrag ändert, wobei sich diese Änderung auch auf mehrere Abtastschritte verteilen kann. Durch Einführen einer Totzone wird die Aktivierung der Aufschaltung durch reines Bitrauschen verhindert. Erreicht die Regelkreisdynamik aufgrund von Reibungseffekten nicht die vom Parallelmodell vorgegebene Referenzdynamik, so wird die Aufschaltgröße AG dem Additionspunkt 50 zugeleitet. Reicht die Regelkreisdynamik aus, so erfolgt keine Aufschaltung.

Die Aufschaltung bleibt solange aktiv, bis erstmalig die Istposition des Stellwerks die Ausgangsgröße des Parallelmodells UM oder die Regelgröße UI den Sollwert US erreicht. Eine erneute Aktivierung ist erst wieder möglich wenn eine Sollwertänderung erfolgt. Die Aufschaltlogik 90 beinhaltet eine Überwachungseinrichtung. Diese verhindert eine Aufschaltung, wenn in bestimmten Betriebspunkten das System keine Reibung aufweist. So können Störanregung die Reibung verringern. Ferner ist ab einer bestimmten Drehzahl die Reibung im Stellwerk soweit herabgesetzt, daß keine Aufschaltung mehr benötig wird.

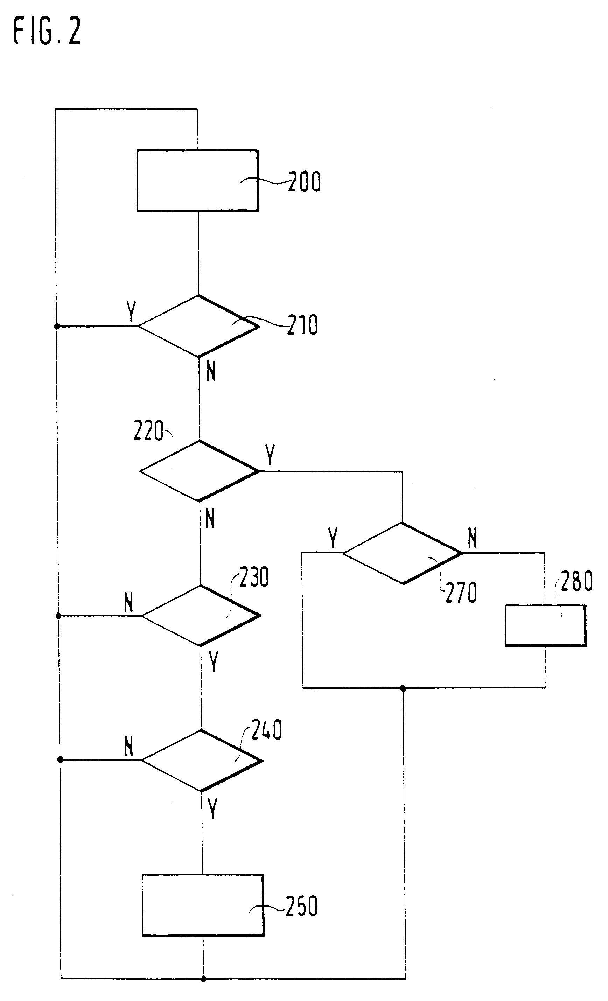

Anhand des Flußdiagramms der Figur 2 wird die Funktion des erfindungsgemäßen Systems mit Aufschaltung näher erläutert. In einem ersten Schritt 200 werden die Größen Sollwert US, Istwert UI des Reglers, die Aufschaltgröße AG und die Ausgangsgröße UM des Parallelmodells 80 erfaßt. In einer ersten Abfrageeinheit 210 erfolgt eine Überprüfung dahingehend ob Betriebszustände vorliegen in denen keine Aufschaltung notwendig ist. Liegen solche vor so wird eine Aufschaltung verhindert.

Störanregungen können den Einfluß der Reibung verringern. In diesen Fällen ist keine Aufschaltung nötig. Es hat sich herausgestellt, daß sich ab einer bestimmten Drehzahl der Reibungseffekt stark verringert. Liegt die Drehzahl N über einer Schwelle NS, so ist keine Aufschaltung nötig. Störanregungen können auch dadurch erkannt werden, daß der Istwert UI ausgewertet wird. Schwankt der Istwert laufend um einen Mittelwert, so ist das Stellwerk in Bewegung und somit ist keine Haftreibung vorhanden. Zur Erkennung dieser Schwankungen wird der Istwert UI zuerst differenziert, um einen vorhanden Gleichspannungsanteil zu beseitigen. Anschließend erfolgt die Berechnung der Regelflächen mittels einer betragsmäßigen Integration. Hierbei wird die Integration über ein festes Beobachtungsintervall erstreckt. Übersteigt dieser aufintegrierte Wert X eine vorgegebene Schwelle XS liegen Störanregungen vor. Die Schwelle XS wird gebildet, indem die Ausgangsgröße des Parallelmodells der gleichen Regelflächenberechnung unterzogen wird. Ist die Regelfläche X des Istwerts UI kleiner als die Regelfläche XS der Ausgangsgröße des Parallelmodells UM wird die Aufschaltung freigegeben. Ist die Regelfläche X des Istwerts UI größer als die doppelte Regelfläche XS der Ausgangsgröße des Parallelmodells UM wird die Aufschaltung gesperrt.

In einer zweiten Abfrageeinheite 220 erfolgt eine Abfrage dahingehend, ob die Aufschaltung aktiv ist. Bei nicht aktiver Aufschaltung, dies bedeutet, geöffneter Schalter 130 folgt eine weitere Abfrageeinheit 230. Dies Abfrageeinheit 230 führt eine Überprüfung dahingehend durch, ob eine relevante Änderung des Sollwert US vorliegt. Diese Abfrage verhindert die Aktivierung der Aufschaltung durch reines Bitrauschen.

Diese Abfrage erfolgt in der Regel so, daß der Sollwert differenziert wird, übersteigt die Ableitung DUS des Sollwerts US eine Schwelle DS erfolgt folgt die Abfrageeinheit 240. Damit auch kleine Sollwertänderungen, die sich auf ein größeres Zeitintervall verteilen, dedektiert werden können, werden die pro Abtastschritt gebildeten Ableitungswerte aufsummiert. Überschreitet dieser Wert die vorgegebene Schranke, so wird ebenfalls die Aufschaltung freigegeben. Eine Aufschaltung erfolgt also nur, wenn sich der Sollwert in einem bestimmten Zeitraum um mehr als einen vorgegebenen Wert ändert. Ist dies der Fall, so arbeitet das System die Abfrage 240 ab. Im anderen Fall, wenn entschieden wird, daß keine Aufschaltung notwendig wird beginnt mit Schritt 200 einer neuer Durchlauf.

Die Abfrageeinheit 240 beurteilt die Dynamik des Regelkreises. Zur Beurteilung wird die Dynamik des Regelkreises mit der des Parallelmodells verglichen. Das Parallelmodell erzeugt einen Wert, den der Istwert UI bei guter Dynamik erreichen sollte. Ist der Istwert UI des Regelkreises kleiner als das Ausgangssignal des Parallelmodells, so reicht die Dynamik des Regelkreises nicht aus. Die Aufschaltung wird in Schritt 250 aktiviert. Erreicht der Istwert UI des Regelkreises im folgenden denselben Wert wie das Ausgangssignal des Parallelmodells, so ist die Dynamik des Regelkreises ausreichend. Die Aufschaltung wird deaktiviert. Eine erneute Aktivierung der Aufschaltung erfolgt nur, wenn eine erneute relevante Änderung des Sollwerts auftritt.

Anstelle des Vergleichs der beiden Größen, kann auch die Aufschaltgröße AG ausgewertet werden. Eine Aufschaltung erfolgt nur, wenn die Aufschaltgröße AG einen bestimmten Wert AS überschreitet.

In Schritt 250 wird die Aufschaltung aktiviert. Die Logikschaltung 90 gibt ein Signal L ab, auf das hin die Schalteinrichtung 130 das Aufschaltsignal zum Additionspunkt 50 weiterleitet.

Ergibt die Abfrage 220, daß die Aufschaltung schon aktiv ist, so erfolgt in der Abfrageeinheit 270 eine Überprüfung dahingehend, ob die Position des Stellwerks (Istwert) das Ausgangssignal des Parallelmodells UM erreicht hat. Ist dies nicht der Fall, so bleibt die Aufschaltung aktiv. Für den Fall, daß der Istwert das Ausgangssignal des Parallelmodells erreicht, ändert die Logikschaltung ihr Ausgangssignal L dahingehend, daß die Aufschaltgröße nicht mehr zum Additionspunkt 50 gelangt.

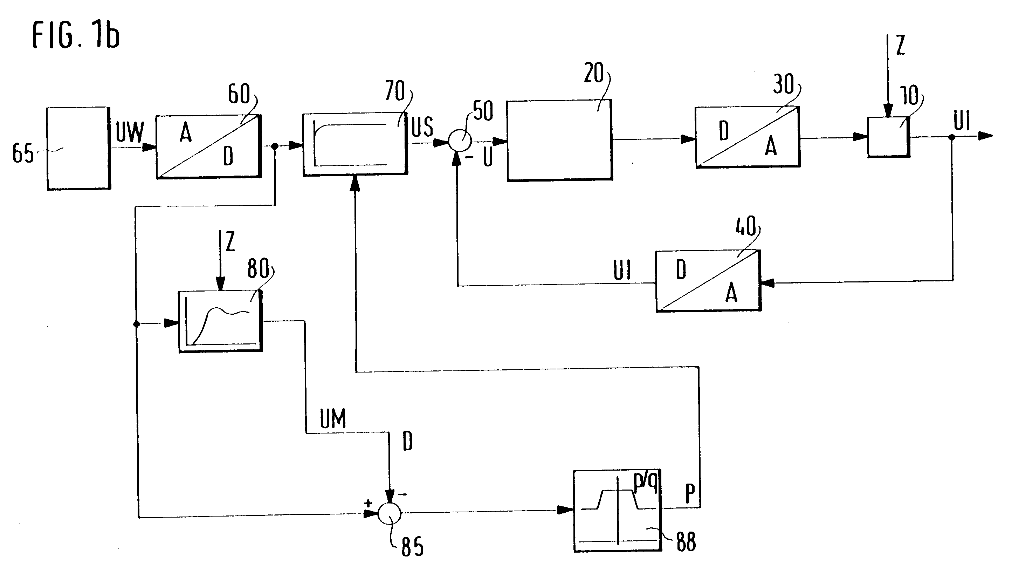

In Figur 1b ist eine schematische Darstellung eines weiteren Ausführungsbeispiels des erfindungsgemäßen Regelsystems aufgezeigt. Auf das mengenbestimmendes Glied und das Stellwerk 10 wirken verschiedene äußere Störgrößen Z ein. Dieses Stellwerk 10 erhält gegebenenfalls über den DA-Wandler 30 von dem ihm zugeordneten Regler 20 eine Eingangsgröße zugeführt. Abhängig von diesem Signal und den verschiedenen Störgrößen ergibt sich die tatsächliche Position des Stellwerks. Diese wird als Istwert UI mit negativem Vorzeichen auf den Additionspunkt 50 zurückgeführt. Gegebenenfalls liegt in dieser Leitung der DA-Wandler 40. Der Additionspunkt 50 bildet die Regeldifferenz für den Regler 20.

Als weitere Größe liegt an dem Additionspunkt 50 der Sollwert US für den Regler 20 an. Dieser Sollwert hängt von der gewünschten Position des mengenbestimmenden Gliedes UW ab. Die Steuereinrichtung 65 liefert abhängig von verschiedenen Betriebskenngrößen das Signal UW, das die gewünschte Position des mengenbestimmenden Gliedes kennzeichnet. So verwendet die Steuereinrichtung 65 unter anderem ein Signal, das von der Fahrpedalstellung abhängt, zur Berechnung der gewünschten Position des mengenbestimmenden Gliedes.

Abhängig davon, ob die Steuereinrichtung 65 und der Regler 20 digital bzw. analog ausgeführt sind, ist der AD- bzw. der DA-Wandler 60 notwendig. Das Signal UW, das der gewünschten Position des mengenbestimmenden Gliedes entspricht, gelangt zu einem Sollwertformer 70, dessen Ausgangsgröße US den Sollwert für den Regler 20 darstellt. Dieser Sollwertformer 70 kann auch als Führungsformer bezeichnet werden, da er die Führungsgröße (Sollwert) des Regelkreises beeinflußt. Durch einen zweiten Eingang wird angedeutet, daß das Übertragungsverhalten des Sollwertformers von außen beeinflußbar ist.

Das Signal UW, das die gewünschte Position des mengenbestimmenden Gliedes angibt, wird über das Parallelmodell 80 sowie direkt zu einem Summationspunkt 85 geleitet. Das Parallelmodell 80 bildet den Regelkreis bestehend aus Regler und Stellwerk nach. An seinem Ausgang liegt das Signal UM, das die tatsächliche Position des Stellwerks nachbildet. Am Ausgang des Summationspunkts 85 liegt ein Signal an, das der Regeldifferenz, dem Eingangssignal des Reglers 20 nachbildet. Es wird im folgenden als Pseudo-Regeldifferenz D bezeichnet. Diese Pseudo-Regeldifferenz D dient als Eingangsgröße eines Kennfeldes 88, in dem Parameter p bzw p/q abgespeichert sind, die das übertragungsverhalten des Sollwertformers bestimmen, hierzu ist das Kennfeld mit dem Sollwertformer verbunden.

In der Regel ist das Regelsystem bestehend aus Regler und Stellwerk so ausgelegt, daß der Regelkreis im Kleinsignal (kleine Regelabweichung) eine maximale Dynamik aufweist, wobei kein oder nur sehr geringes Überschwingen auftritt. Diese Auslegung hat zur Folge, daß im Großsignal (große Regelabweichung) ein nichlinearer Regler zum Überschwingen neigt. So kann der Fall eintreten, daß bei plötzlichen starken Änderungen (Anstieg) der gewünschten Position des mengenbestimmenden Gliedes UW sich die Regeldifferenz Ausgangssignal des Additionspunkts 50 stark ändert.

Dies führt dazu, daß der Regler eine große Stellgröße ausgibt und dem Regelkreis viel Energie zugeführt wird. Zur überwindung der Reibung ist eine hohe Energiezufuhr nötig. Ist die Reibung überwunden, wird nur noch wenig Energie benötigt, um eine Änderung der Stellwerksposition zu bewirken. Der Regler gibt erst dann eine geänderte Stellgröße aus, wenn sich die Stellwerksposition ändert, bis zu diesem Zeitpunkt wird dem Stellwerk Energie zugeführt. Diese große Energiezufuhr hat zur Folge, daß das Stellwerk nach Überwindung der Reibung seine Position um einen sehr großen Betrag ändert. Das Stellwerk kann dabei eine Position einnehmen, die größer als die gewünschte Position ist. Dies führt dazu, daß das Regelsystem überschwingt. Um dieses Überschwingen zu vermeiden, wird erfindungsgemäß das gewünschte Signal UW mittels eines Sollwertformers 70 modifiziert. Bei einem plötzlichen Anstieg der gewünschten Position UW wird nicht die volle Signaländerung zum Additionspunkt 50 weitergeleitet.

Da bei plötzlichen großen Änderungen der gewünschten Position des mengenbestimmenden Gliedes das System zum Überschwingen neigt, muß in diesem Fall der Sollwertformer 70 im wesentlichen PT1-Verhalten aufweisen. Das heißt, er gibt die Änderung verzögert weiter. Bei plötzlichen Änderungen paßt sich der Sollwert US nur langsam an den geänderten Wert an. Dadurch wird erreicht, daß das Regelsystem nicht überschwingt. Bei kleinen Änderungen des gewünschten Signals führt dies aber dazu, daß auf kleine Änderungen nicht umgehend reagiert wird, die Dynamik des Systems verschlechtert sich. In diesem Fall ist es erforderlich, daß sich der Sollwert sehr schnell ändert, dies wird zum Beispiel durch einen geeigneten Sollwertformer erzielt. Ein solcher kann PDT1 Verhalten oder P Verhalten aufweisen. Dies bedeutet, daß das Übertragungsverhalten des Sollwertformers je nach Regeldifferenz unterschiedliche Eigenschaften aufweisen muß. Hierzu sind in dem Kennfeld 88 die Parameter p bzw. das Verhältnis der Parameter p/q abhängig von der Regeldiffernz abgelegt.

Wird die tatsächliche Regelabweichung, die am Ausgang des Additionspunkts 50 anliegt verwendet, so ist diese schon von dem Sollwertformer abhängig. Um dies zu vermeiden, wird mittels des Parallelmodells 80 eine Pseudo-Regeldifferenz D gebildet.

Dieses Parallelmodell bildet den geschlossenen Regelkreis, der aus dem Regler 20 und dem Stellwerk 10 besteht, nach. Das Parallelmodell berechnet anhand des Signals UW, das der gewünschten Position des mengenbestimmenden Gliedes entspricht, ein Ausgangssignal. Dieses Ausgangssignal entspricht im Idealfall der tatsächlichen Position UI des Stellwerks. Aus der Differenz von dem Signal, das die Gewünschte Position des Stellwerks angibt, und dem Ausgangssignl des Parallelmodells 80 ergibt sich die Pseudo-Regeldifferenz. Abhängig von dieser Pseudo-Regeldifferenz sind dann die Parameter des Sollwertformers im Kennfeld 88 abgelegt. Für betragsmäßig kleine Pseudo-Regeldifferenzen D nimmt p/q größere Werte an als bei einer betragsmäßig großen Pseudo-Regeldifferenz D. Besonders vorteilhaft ist es, wenn diese Parameter nicht nur von der Pseudo-Regeldifferenz D, sondern auch noch von weiteren Betriebskenngrößen wie zum Beispiel von Temperaturwerten abhängen. Die Blöcke 70 und 88 können ebenfalls als adaptiver Führungsformer bezeichnet werden.

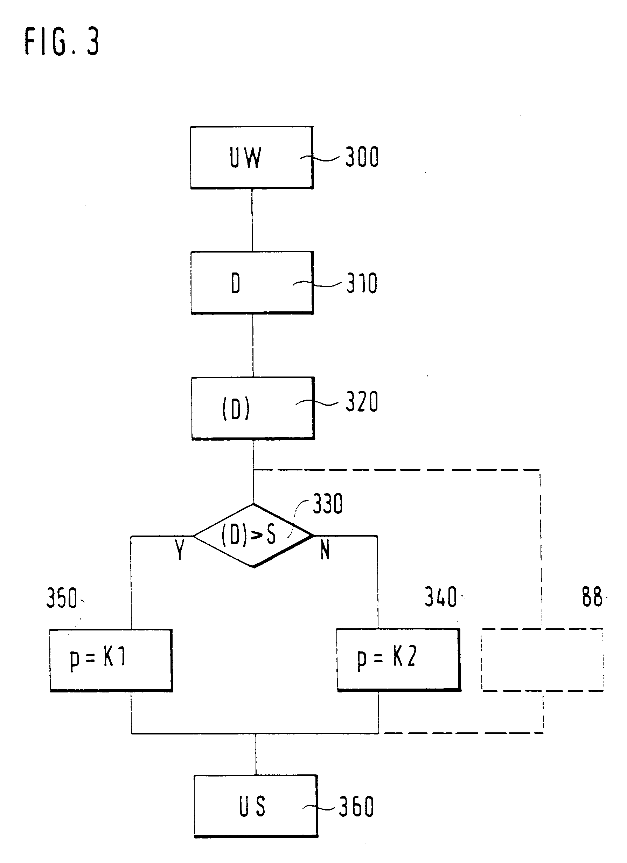

Zur Verdeutlichung der Funktionsweise des erfindungsgemäßen Systems mit einem Sollwertformer mit variablem Übertragungsverhalten dient das Flußdiagramm der Figur 3. Im Schritt 300 wird von der Steuereinrichtung 65 die gewünschte Position des mengenbestimmenden Gliedes UW berechnet. In einem zweiten Schritt 310 bestimmt das Parallelmodell 80 den Istwert UM des Modells, und die Pseudo-Regeldifferenz D. Der Betragsbildner 320 berechnet den Betrag |D| der Pseudo-Regeldifferenz.

Die Entscheidungsstufe 330 wählt abhängig von der Größe des Betrags |D| der Pseudo-Regeldifferenz eine Konstante K1 bzw. eine Konstante K2 für den Sollwertformer 70 aus. Im einfachsten Fall ist dies so realisiert, daß dann wenn die Pseudo-Regeldifferenz größer als eine Schwelle S ist, im Schritt 350 die Konstante p auf den Wert K1 festgelegt wird. Im anderen Fall, wenn die Pseudo-Regeldifferenz D kleiner als die Schwelle ist, wird im Schritt 340 die Propotionalitätskonstante p des Sollwertformers auf den Wert K2 festgelegt.

Vorteilhaft ist auch, wenn die Abfrageeinheit 330 feiner strukturiert ist. Zum Beispiel in der Form, daß für mehrere Bereiche der Pseudo-Regeldifferenz unterschiedliche Proportionalitätskonstanten ausgewählt werden. Es ist besonders vorteilhaft, wenn an Stelle der Blöcke 330, 340 und 350 ein Kennfeld 88 angeordnet ist, in dem die Proportionalitätskonstante p bzw das Verhältnis p/q niedergelegt ist. Im Schritt 360 erzeugt der Sollwertformer 70 abhänig von der Proportionalitätskonstante p den Sollwert US für den nachfolgenden Stellregler.

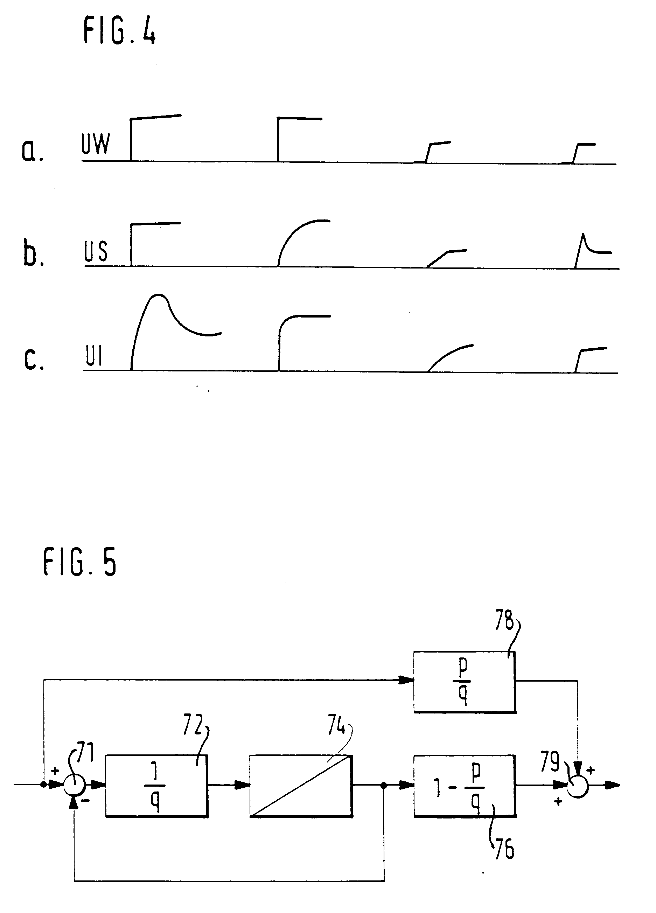

In Figur 4 sind über der Zeit verschiedene Signalverläufe bei unterschiedlichen Bedingungen aufgezeigt. Es sind Signale aufgetragen, die die gewünschte Position des mengenbestimmenden Gliedes UW, den Sollwert für den Regler US und die tatsächliche Position UI des Stellwerks anzeigen. Üblicherweise ist der Regler 20 so ausgelegt, daß er auf kleine Regelabweichungen (Kleinsignal) umgehend reagiert. Solche kleinen Regelabweichungen beruhen auf kleinen Änderungen des Sollwerts bzw. kleinen Störungen Z, die eine Änderung des Signals UI bewirken.

Unter Punkt 1 in Figur 4 ist nun dargestellt, daß sich das Signal UW, das die gewünschte Position des mengenbestimmenden Gliedes angibt, sprunghaft stark ändert (Großsignal). Enthält die Einrichtung keinen Sollwertformer, so ergibt sich für den Sollwert US ein entsprechender Sprung. Der Regler ist so ausgelegt, daß er kleine Änderungen schnell auszuregeln versucht. Dies würde bei Systemen ohne Sollwertformer im Großsignal zum Überschwingen führen.

Wird nun ein Sollwertformer mit Verzögerungsverhalten, zum Beispiel ein PT1-Glied mit hoher Verzögerung verwendet, so reagiert der Sollwert US auf eine plötzliche starke Änderung des Signals UW erst verzögert, wie in Figur 4b unter Punkt 2 dargestellt. Dadurch können wie in Figur 4c Punkt 2 dargestellt, die Überschwinger vermieden werden. Das Stellglied nimmt relativ schnell die neue gewünschte Position UI ein.

Ein solcher Sollwertformer führt aber zu einer schlechten Dynamik im kleinsignal. Ändert sich das Signal UW, das die gewünschte Position des mengenbestimmenden Gliedes angibt, nur um einen kleinen Betrag wie in Punkt 3, Figur 4 dargestellt, so wird diese kleine Änderung noch durch den Sollwertformer verzögert. Dies bewirkt, daß sich die neue Stellwerksposition nur sehr langsam einstellt, siehe Figur 4c Punkt 3.

Durch diesen Sollwertformer ergibt sich daher beim Kleinsignal eine schlechte Dynamik. Diese schlechte Dynamik kann mit dem erfindungsgemäßen System verbessert werden. Durch ein entsprechendes Übertragungsverhalten des Sollwertformers ergibt sich für die tatsächliche Position UI ein Signal gemäß der Figur 4c unter Punkt 4. Der Sollwertformer erzeugt aus einem Signal mit kleiner Änderung ein Signal, das in etwa dem der Figur 4b unter Punkt 4 entspricht. Dies hat zur Folge, daß das mengenbestimmende Glied ohne überschwingen seine neue Position umgehend einnimmt.

Je nach dem ob eine kleine oder große Änderung der Führungsgröße (Sollwert) vorliegt, sind unterschiedliche Übertragungsfunktionen des Fühungsformers notwendig. Bei dem erfindungsgemäßen System ist das Übertragungsverhalten des Sollwertformers abhängig von der Pseudo-Regeldifferenz D. Abhängig von dieser Pseudo-Regeldifferenz D, die dem Eingangssignal des Reglers 20 nachbildet, wird ein unterschiedliches Übertragungsverhalten des Sollwertformers vorgegeben.

In Figur 5 ist eine mögliche Realisierung des Sollwertformers dargestellt. Das Eingangssignal gelangt über einen Summationspunkt 71 zu einem Proportionalglied 72 und anschließend zu einem Integrator 74. Das Ausgangssignal des Integrators 74 wird mit negativem Vorzeichen zum Summationspunkt 71 zurückgeführt und zum anderen einem weiteren proportionalen Glied 76 zugeleitet. Desweiteren gelangt das Eingangssignal über ein Proportionalglied 78 zu einem Summationspunkt 79. Die Ausgangssignale der Proportionalglieder 76 und 78 werden im Summationspunkt 79 addiert und bilden so das Ausgangssignal des Sollwertformers. Das erste Proportionalglied 72 besitzt die Proportionalitätskonstante 1/q. Das weitere Proportionalglied 76 besitzt die Proportionalitätskonstante 1 - p/q. Das Proportionalitätsglied 78 hat die Proportionalitätskonstante p/q.

Insgesamt ergibt sich eine Übertragungsfunktion G(s) gemäß der Formel:

$$G(s) = (1 + p*s)/(1 + q*s)$$

Dabei ist die Größe p variabel. Da nur die Größe p variabel und die Größe q fest bleibt, läst sich das Übertragungsverhalten des Sollwertformers verändern, ohne daß sich dessen Eigendynamik ändert. Für betragsmäßig kleine Pseudo-Regeldifferenz ergibt sich aus dem Kennfeld 88 für das Verhältnis p/q ein Wert größer/gleich 1. In diesem Fall besitzt der Sollwertformer Lead-Verhalten, für p/q die wesentlich größer 1 sind entspricht dies nahezu einem PDT1 Verhalten. Bei betragsmäßig großen Pseudo-Regeldifferenz ergibt sich aus dem Kennfeld 88 ein kleiner Wert für das Verhältnis p/q. In diesem Fall besitzt der Sollwertformer Lag-Verhalten, bei p/q gleich 0 entspricht dies nahezu PT1 Verhalten. Für p gleich q ergibt sein für den Sollwertformer P Verhalten.

Es ist entweder ein System mit Aufschaltung gemäß Figur 1a oder ein System mit variablem Sollwertformer gemäß figur 1b vorgesehen. Eine besonders vorteilhaftes System ergibt sich, wenn die beiden Varianten Aufschaltung und variabler Sollwertformer gleichzeitig ausgeführt sind. Dies bedeutet, daß der Sollwert über einen Sollwertformer 70 mit variablen Übertragungsverhalten zum Regler 20 gelangt und daß auf den Sollwert und/ oder auf den Istwert eine Aufschaltgröße (AG) aufgeschaltet wird.

**Patentansprüche**

1. System zur Regelung eines Stellwerks (10) in einem Kraftfahrzeug, mit einem Regler (20), der abhängig vom Vergleich eines Sollwerts (US), der der gewünschten Stellwerksposition entspricht, mit einem Istwert (UI), der die tatsächliche Position des Stellwerks angibt, eine Stellgröße an das Stellwerk (10) abgibt, wobei der Sollwert (US) von der gewünschten Stellwerksposition (UW) und dem Ausgangssignal eines Führungsformers (70, 80, 90, 110, 120) abhängt, dadurch gekennzeichnet, daß ein Parallelmodell (80) ausgehend von dem Sollwert (US) durch nachbilden des Regelkreises eine Schätzgröße (UM) für den Istwert bildet und die Schätzgröße (UM) das Übertragungsverhalten des Führungsformers beeinflußt.

2. System nach Anspruch 1, dadurch gekennzeichnet, daß auf den Sollwert und/ oder auf den Istwert zusätzlich eine Aufschaltgröße (AG) aufgeschaltet wird, wobei der Führungsformer ausgehend von der Schätzgröße (UM) die Aufschaltgröße bestimmt.

3. System nach einem der Ansprüche 1 oder 2, dadurch gekennzeichnet, daß der Sollwert (US) über einen Sollwertformer (70) mit variablem Übertragungsverhalten zum Regler (20) gelangt, und desen Übertragungsverhalten von einer Pseudo-Regelabweichung (D), der Differenz zwischen dem Sollwert (US) und der Schätzgröße (UM) des Parallelmodells (80), abhängt.

4. System nach einem der vorhergehenden Ansprüche, dadurch gekennzeichnet, daß das Parallelmodell (80) zumindestens den Regler (20) und das Stellwerk nachbildet.

5. System nach einem der vorhergehenden Ansprüche, dadurch gekennzeichnet, daß die Aufschaltung der Aufschaltgröße (AG) nur dann erfolgt, wenn die Regeldynamik des Regelkreises schlechter ist als die des Parallelmodells, wobei zur Beurteilung der Dynamik eine von der Schätzgröße abhängige Größe verwendet wird.

6. System nach einem der vorhergehenden Ansprüche, dadurch gekennzeichnet, daß die Aufschaltgröße von der Differenz zwischen der Schätzgröße und dem Istwert des Reglers (tatsächliche Position des Stellwerks) abhängt.

7. System nach einem der vorhergehenden Ansprüche, dadurch gekennzeichnet, daß die Aufschaltung solange aktiv bleibt, bis erstmalig der Istwert des Stellwerks die Schätzgröße UM erreicht.

8. System nach einem der vorhergehenden Ansprüche, dadurch gekennzeichnet, daß eine Überwachungseinrichtung vorgesehen ist, die bewirkt, daß bei Störanregung und/oder ab einem bestimmten Drehzahlwert keine Aufschaltung erfolgt.

9. System nach einem der vorhergehenden Ansprüche, dadurch gekennzeichnet, daß die Aufschaltung nur bei einer relevanten Änderung des Sollwert erfolgt.

10. System nach einem der vorhergehenden Ansprüche, dadurch gekennzeichnet, daß in einem Kennfeld wenigstens abhängig vom Betrag der Pseudo-Regeldifferenz (D) Parameter abgelegt sind, die das Übertragungsverhalten des Sollwertformers bestimmen.

11. System nach einem der vorhergehenden Ansprüche, dadurch gekennzeichnet, daß das Übertragungsverhalten des Sollwertformers 70 bei betragsmäßig großer Pseudo-Regeldifferenz im wesentlichen PT1-Verhalten aufweist.

12. System nach einem der vorhergehenden Ansprüche, dadurch gekennzeichnet, daß das Übertragungsverhalten des Sollwertformers 70 bei betragsmäßig kleiner Pseudo-Regeldifferenz im wesentlichen PDT1 Verhalten aufweist.

13. System nach einem der vorhergehenden Ansprüche, dadurch gekennzeichnet, daß der Sollwertformer 70 eine Übertragungsfunktion gemäß der Formel $G(s) = (1 + p^*s)/(1 + q^*s)$ aufweist, wobei die Konstante p oder das Verhältnis p/q von der Pseudo-Regeldifferenz abhängen.

## Claims

1. System for controlling an actuator (10) in a motor vehicle, having a controller (20) which outputs an adjustment variable to the actuator (10) as a function of the comparison of a desired value (US), which corresponds to the desired position of the actuator, with an actual value (UI), which indicates the actual position of the actuator, the desired value (US) depending on the desired position (UW) of the actuator and on the output signal of a control former (70, 80, 90, 110, 120), characterized in that a parallel model forms an estimated variable (UM) for the actual value on the basis of the desired value (US) by simulating the control circuit, and the estimated variable (UM) influences the transmission behaviour of the control former.

2. System according to Claim 1, characterized in that an add-on variable (AG) is additionally added to the desired value and/or the actual value, the control former determining the add-on variable on the basis of the estimated variable (UM).

3. System according to Claims 1 or 2, characterized in that the desired value (US) passes via a desired value former (70) with a variable transmission behaviour to the controller (20), and its transmission behaviour depends on a pseudo control deviation (D), the difference between the desired value (US) and the estimated value (UM) of the parallel model (80).

4. System according to one of the preceding claims, characterized in that the parallel model (80) simulates at least the controller (20) and the actuator.

5. System according to one of the preceding claims, characterized in that the adding-on of the add-on variable (AG) only takes place when the control dynamics of the control circuit are worse than that of the parallel model, a variable which is dependent on the estimated variable being used to evaluate the dynamics.

6. System according to one of the preceding claims, characterized in that the add-on variable depends on the difference between the estimated variable and the actual value of the controller (real position of the actuator).

7. System according to one of the preceding claims, characterized in that the adding-on remains active until the first time the actual value of the actuator reaches the estimated variable (UM).

8. System according to one of the preceding claims, characterized in that a monitoring device is provided which has the effect that adding-on does not take place when there is a faulty excitation and/or does not take place starting from a specific RPM value.

9. System according to one of the preceding claims, characterized in that the adding-on only takes place when there is a relevant change in the desired value.

10. System according to one of the preceding claims, characterized in that parameters which determine the transmission behaviour of the desired value former are stored in a characteristic diagram at least as a function of the absolute value of the pseudo control difference (D).

11. System according to one of the preceding claims, characterized in that the transmission behaviour of the desired value former 70 has essentially a PT1 behaviour in the case of a pseudo control difference which has large absolute value.

12. System according to one of the preceding claims, characterized in that the transmission ratio of the desired value former 70 has an essentially PDT1 behaviour in the case of a pseudo control difference which has a small absolute value.

**13.** System according to one of the preceding claims, characterized in that the desired value former 70 has a transmission function according to the formula G(s) = (1 + p*s)/(1 + q*s), the constant p or the ratio p/q being a function of on the pseudo control difference.

**Revendications**

**1.** Système pour la régulation d'un actuateur (10) dans un véhicule automobile, avec un régulateur (20), qui à partir de la comparaison d'une valeur de consigne (US), qui correspond à la position souhaitée de l'actuateur, avec une valeur réelle (UI), qui indique la position effective de l'actuateur, délivre à l'actuateur (10) une grandeur de réglage, la valeur de consigne (US) dépendant de la position souhaitée (UW) de l'actuateur et du signal de sortie d'un formateur de gestion (70, 80, 90, 110, 120), système caractérisé en ce qu'un modèle parallèle (80) partant de la valeur de consigne (US) forme par simulation du circuit de réglage une grandeur d'évaluation (UM) pour la valeur réelle, et cette valeur d'évaluation (UM) influence le comportement au transfert du formateur de gestion.

**2.** Système selon la revendication 1, caractérisé en ce qu'à la valeur de consigne et/ou à la valeur réelle est en outre ajoutée une grandeur additionnelle (AG), le formateur de gestion déterminant cette grandeur additionnelle en partant de la grandeur d'évaluation (UM).

**3.** Système selon une des revendications 1 ou 2, caractérisé en ce que la valeur de consigne (US) parvient au régulateur (20) par l'intermédiaire d'un formateur de valeur de consigne (70) avec un comportement de transfert variable, et ce comportement de transfert dépend d'un écart de pseudo-réglage (D), de la différence entre la valeur de consigne (US) et la grandeur d'évaluation (UM) du modèle parallèle (80).

**4.** Système selon une des précédentes revendications, caractérisé en ce que le modèle parallèle (80) simule tout au moins le régulateur (20) et l'actuateur.

**5.** Système selon une des précédentes revendications, caractérisé en ce que l'addition des grandeurs additionnelles (AG) ne s'effectue que lorsque la dynamique de réglage du circuit de réglage est plus mauvaise que celle du module parallèle, tandis que pour l'évaluation de la dynamique, on utilise une grandeur dépendante de la grandeur d'évaluation.

**6.** Système selon une des précédentes revendications, caractérisé en ce que la grandeur additionnelle dépend de la différence entre la grandeur d'évaluation et la valeur réelle du régulateur (position effective de l'actuateur).

**7.** Système selon une des précédentes revendications, caractérisé en ce que l'addition reste active jusqu'à ce que la valeur réelle de l'actuateur atteigne pour la première fois la grandeur d'évaluation (UM).

**8.** Système selon une des précédentes revendications, caractérisé en ce qu'il est prévu un dispositif de surveillance qui intervient pour qu'aucune addition ne se produise lors d'une excitation perturbatrice et/ou à partir d'une valeur déterminée de la vitesse de rotation.

**9.** Système selon une des précédentes revendications, caractérisé en ce que l'addition ne s'effectue que pour une modification importante de la valeur de consigne.

**10.** Système selon une des précédentes revendications, caractérisé en ce que dans un champ caractéristique, sont déposés des paramètres au moins dépendant de la valeur de la pseudo-différence de réglage (D), et qui déterminent le comportement de transfert du formateur de la valeur de consigne.

**11.** Système selon une des précédentes revendications, caractérisé en ce que le comportement de transfert du formateur de la valeur de consigne (70) dans le cas d'une pseudo-différence de réglage de valeur importante est essentiellement un comportement PT1.

**12.** Système selon une des précédentes revendications, caractérisé en ce que le comportement de transfert du formateur de valeur de consigne (70) pour une pseudo-différence de réglage de faible valeur est essentiellement un comportement PDT1.

**13.** Système selon une des précédentes revendications, caractérisé en ce que le formateur de valeur de consigne (70) comporte une fonction de transfert selon la formule G(s) = (1 + p*s)/(1 + q*s), la constante p ou bien le rapport p/q dépendant de la pseudo-différence de réglage.

FIG.1a

EP 0 473 914 B1

FIG. 1b

FIG.2

FIG. 3

```
          ┌──────────────┐
          │      UW      │──── 300
          └──────┬───────┘
                 │
          ┌──────┴───────┐
          │      D       │──── 310
          └──────┬───────┘
                 │
          ┌──────┴───────┐
          │     (D)      │──── 320
          └──────┬───────┘
                 │            330
                 ◇─────────
              Y ╱ (D) > S ╲ N
      ┌───────╱───────────╲───────┐        ┌ ─ ─ ─ ─ ─ ┐
  350 │                           │ 340         88
 ┌────┴─────┐             ┌────────┴─┐      ┌ ─ ─ ─ ─ ─ ┐
 │  p = K1  │             │  p = K2  │      │           │
 └────┬─────┘             └────┬─────┘      └ ─ ─ ─ ─ ─ ┘
      │                        │
      └───────────┬────────────┘
                  │
           ┌──────┴───────┐
           │     U S      │──── 360
           └──────────────┘
```

# FIG. 4

a. UW

b. US

c. UI

# FIG. 5

$$\frac{p}{q}$$ 78

71 72 74 76 79

$$\frac{1}{q}$$

$$1 - \frac{p}{q}$$